# EUROPÄISCHE PATENTSCHRIFT

(11) **EP 1 230 492 B1**
(45) Veröffentlichungstag und Bekanntmachung des Hinweises auf die Patenterteilung: **26.01.2005**
(21) Anmeldenummer: 00984883.9
(22) Anmeldetag: 08.11.2000
(51) Int. Cl.: F16D 65/12

(54) **MECHANISCHE BREMSVORRICHTUNG**
MECHANICAL BRAKING DEVICE
DISPOSITIF DE FREINAGE MECANIQUE

(30) Priorität: 08.11.1999 DE 19953598
(43) Veröffentlichungstag der Anmeldung: 14.08.2002
(73) Patentinhaber: Bubenzer Bremsen Gerhard Bubenzer Ing. GmbH, 57548 Kirchen (DE)
(72) Erfinder: BUBENZER, Gerhard, Klaus, 57258 Freudenberg (DE); OSTHÖVER, Claudius, 53619 Rheinbreitbach (DE)
(74) Vertreter: von Samson-Himmelstjerna, Friedrich R., Dipl.-Phys.
(86) Internationale Anmeldenummer: PCT/DE2000/003925
(87) Internationale Veröffentlichungsnummer: WO 2001/034989

(56) Entgegenhaltungen:
- WO-A-91/10840
- DE-A- 4 114 026
- US-A- 5 330 036

## Beschreibung

Mechanische Bremsvorrichtungen mit drehbaren Bremskörpern, die durch das Andrücken von Bremsbelägen verzögert werden, sind als Fahrzeugbremsen und Industriebremsen weit verbreitet. Bei Fahrzeugen ist die Verzögerung über eine dosierte Bremskraft steuerbar. Bei Industriebremsen müssen sehr schnell hohe Bremskräfte aufgebaut werden, um in kurzer Zeit maximale Verzögerungen zu erreichen.

Bei beiden Anwendungen wird die gewünschte Verzögerung durch Reibung zwischen einem drehbaren Bremskörper und einem relativ zu diesem fixierten Bremsbelag erzielt. Die Verzögerung des Bremskörpers wird über eine Welle auf die abzubremsende Masse übertragen. Als Bremskörper dienen Scheiben, an deren Radialflächen die Bremsbeläge angreifen, oder Bremstrommeln, an deren inneren oder äußeren Umfangsflächen die Bremsbeläge angreifen.

Bei der Gestaltung solcher Bremsen beeinflußt die Reibwirkung zwischen Bremsbelag und Bremskörper den Verschleiß der Bremskörper und Bremsbeläge an den Reibflächen sowie die Abmessungen der Bremsvorrichtung und die zusätzlich abzubremsenden Massen.

Besonders großen Einfluß auf diese Zielgrößen hat die Gestaltung der Wirkflächen der Bremsen, nämlich der Bremsfläche des Bremskörpers und der Bremsfläche des Bremsbelags.

Als Bremsbelag dienen organische und anorganische Werkstoffe, die auf Trägerplatten aufgenietet, aufgesintert oder aufgeklebt sind.

Die drehbaren Bremskörper werden aus metallischen Werkstoffen wie Stahl, Grauguß und Aluminium oder aus Verbundwerkstoffen hergestellt.

Auch beschichtete Bremskörper sind bekannt. Dabei werden auf metallische Grundkörper Metallschichten thermisch aufgespritzt und anschließend mechanisch (Drehen, Schleifen) bearbeitet. Auch verchromte und vernickelte Bremskörper werden eingesetzt, um in erster Linie den Verschleiß herabsetzen und eine Korrosion der Bremsflächen zu verhindern. Aufwendige keramische und metallkeramische Überzüge in Verbindung mit keramischen Verkleidungen für aufwendige Bremskörper beschreibt FR-A 2717875.

Andere beschichtete Fahrzeugbremsscheiben sind aus der gattungsbildenden W091/10840, DE-G 295 11 652 sowie aus US-P 5,224,572 DE-A 196 08 952 und DE-P 44 13 306 bekannt. Hier dienen jedoch die Beschichtungen als Verschleißschutz, Verstärkung und/oder Überhitzungsschutz und damit letztlich nur der Erhöhung der Standzeiten.

Hartstoffbeschichtungen werden als Verschleißschutz in Dünnschichttechnologie aufgebracht und sind aus DE 35 45 636 C2 bekannt. Diese Schichten sollen die Standzeiten und die Lebensdauer, beispielsweise von Werkzeugen für Zerspanprozesse erhöhen. Dabei wird der Spanabfluß durch harte, glatte Oberflächen und damit herabgesetzte Reibung erleichtert.

Herkömmliche Beschichtungen von Bremskörpern erfordern jedoch hohen Fertigungsaufwand, aufwendige Nachbearbeitungen, sind an bestimmte Grundwerkstoffe gebunden, verschlechtern die Reibwirkung oder haben nur eine sehr begrenzte Standfestigkeit.

Die Aufgabe der vorliegenden Erfindung besteht darin, verbesserte Bremsvorrichtungen zu ermöglichen. Insbesondere kann eine weitere Aufgabe darin liegen, eine Beschichtung für Bremskörper darzustellen, die auf endbearbeitete Bremsflächen von Bremskörpern aus beliebigem Grundmaterial aufgebracht werden kann, die die Reibwirkung zwischen den beiden Reibflächen erhöht und den Verschleiß des Bremskörpers und des Bremsbelags reduziert.

Erfindungsgemäß wird diese Aufgabe durch eine 3-30 µm dünne Hartschicht auf der Reibfläche des Bremskörpers gelöst.

Die verbesserte Reibwirkung läßt für gleiche Verzögerungen kleinere Bremskräfte zu. Damit können die Bremsvorrichtungen kleiner und leichter ausgelegt werden.

Härtegrade über 1000 HV (0,05/10) haben sich dabei als besonders vorteilhaft ergeben.

Nach Anspruch 3 wird insbesondere die Verschleißfestigkeit der Hartschicht erhöht, wenn die Beschichtung einer kritischen Last L_{c} > 40 N standhält, wobei die kritische Last L_{c} ein Maß für die Haftfestigkeit der Schicht auf dem Bremskörper ist.

Die Ansprüche 4 und 5 geben besonders vorteilhafte Beschichtungswerkstoffe an.

Nach Anspruch 6 wird die Beschichtung mit Dünnschichttechnologien aufgebracht. Diese "Sputterverfahren" erlauben besonders gleichmäßige und dichte Beschichtungen. So können kostengünstige metallische Werkstoffe wie Stahl, Grauguß und Aluminium aber auch Laminat- oder Faserverbundwerkstoffe beschichtet werden. Damit sind auch besonders leichte Bremskörper zu realisieren.

Nach Anspruch 7 können die Beschichtungen auf endbearbeiteten Bremskörper aufgebracht werden. Damit werden aufwendige Nachbearbeitungsprozesse der harten Oberflächen vermieden.

Nach Anspruch 8 und 9 sind auch mehrlagige Beschichtungen möglich, bei denen zuerst eine Korrosionsschutzschicht (beispielsweise aus Nickel) aufgebracht wird und darauf die Hartschicht. Dadurch wird verhindert, daß durch unvermeidbare Haarrisse der Hartschicht eintretende Feuchtigkeit den Bremskörper korrodiert. Ein solcher mehrlagige Aufbau erhöht die Standzeiten der Bremsscheiben auch in korrosiven Umgebungen erheblich und verlängert damit notwendige Wartungs- und Inspektionsintervalle.

Typische Bremskörper sind nach Anspruch 10 als Bremsscheibe oder als Bremstrommel ausgebildet.

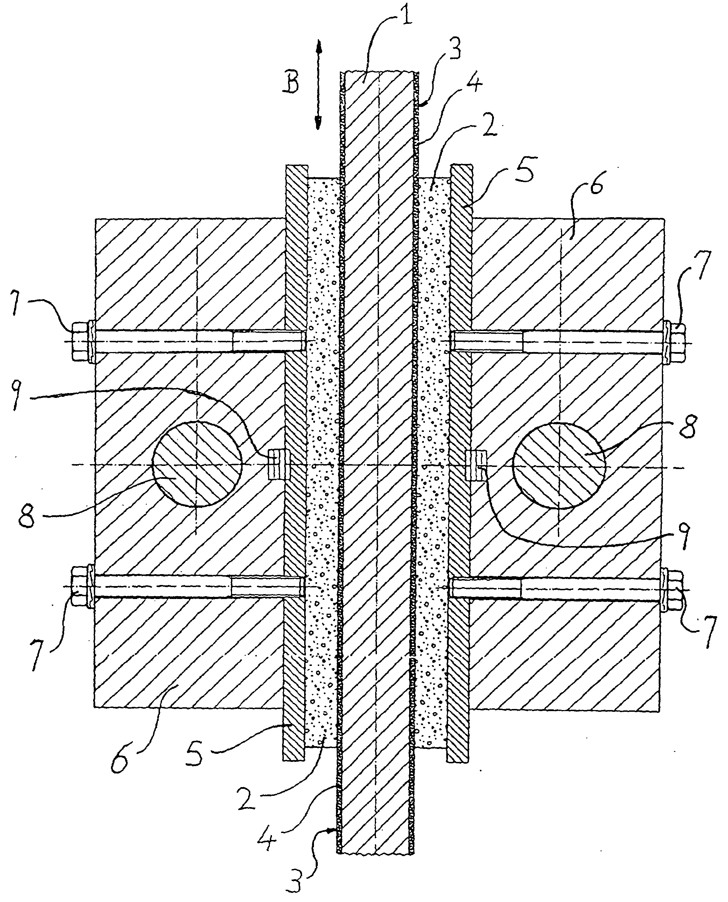

Die Abbildung zeigt eine schematische Schnittdarstellung mit den Kernelementen einer Scheibenbremse.

Dargestellt ist der Ausschnitt einer Bremsscheibe **1**, die in Pfeilrichtung B bewegt werden kann und deren radiale Reibflächen **3** mit einer Beschichtung **4** versehen sind. Die Beschichtungsstärke ist hier nicht maßstäblich dargestellt und beträgt beispielsweise 5 bis 6 µm.

Die Beschichtung **4** aus Titan-Aluminiummnitrid (TiAIN) kann durch reaktive Kathodenzerstäubung von Titan-Aluminium-Targets in einer Atmosphäre aus Argon und Stickstoff auf die in einem Plasmaätzprozeß gereinigte Bremsscheibe aufgebracht werden.
Versuche mit beschichteten und unbeschichteten Bremsscheiben aus Stahl (St 52-3) haben TiAlN-Beschichtungen in einer Stärke von 6 µm eine Erhöhung des Reibkoeffizienten von 37% ergeben. Die Härte der Schicht beträgt dabei 3300 HV (0,05/10). Sie kann ein- oder mehrschichtig aufgebracht werden. Die Haftfestigkeit einer solchen Schicht erlaubt kritische Lasten L_{c} > 40 N.

An den Reibflächen **3** greifen Bremsbeläge **2** an, die über Träger **5** mit Bremsbacken **6** verbunden sind. Schrauben **7** halten die Träger gemeinsam mit den Bremsbelägen **2** an den Bremsbacken **6**, und Sicherungskeile **9** stellen zwischen den Bremsbacken **6** und den Trägern **5** über entsprechende Nuten einen Formschluß her, der die in Pfeilrichtung B wirkenden Scherkräfte auf die Bremsbacken **6** überträgt.

Die eigentliche Bremskraft, die senkrecht auf die Reibflächen **3** wirkt, wird von Achsen 8 über die Bremsbacken **6** und die Träger **5** mit den Bremsbelägen **2** auf die Reibflächen **3** aufgebracht und damit die Reibwirkung zwischen Bremskörper **1** und Bremsbelägen **2** bewirkt.

Die Achsen **8** sind Teil eines nicht dargestellten Bremsmechanismus, in dem die Bremskräfte hydraulisch, mechanisch oder auf andere übliche Weise erzeugt werden.

Nicht dargestellt sind Trommelbremsen, bei denen die Bremskräfte über innere oder äußere beschichtete Umfangsflächen einer Bremstrommel übertragen werden. Dabei sind die Bremsbeläge den Krümmungsradien der entsprechenden Trommeloberfläche angepaßt.

In einer ebenfalls nicht dargestellten Bandbremse kann der Bremsbelag auch ein die äußere Umfangsfläche einer Bremstrommel teilweise umschlingendes Band sein, bei der die Bremswirkung durch Umschlingungsreibung zwischen dem Band und der äußeren beschichteten Umfangsfläche der Bremstrommel erzielt wird.

## Patentansprüche

1. Mechanische Bremsvorrichtung mit einem drehbaren, mit einer Beschichtung (4) versehenen Bremskörper (1), auf den ein Bremsbelag (2) eine Kraft ausübt, **dadurch gekennzeichnet, daß** die Beschichtung (4) eine die Reibwirkung erhöhende, 3 - 30 µm starke Hartstoffschicht umfaßt.

2. Bremsvorrichtung nach Anspruch 1, wobei die Hartstoffschicht eine Härte von über 1000 HV (0,05/10) hat.

3. Bremsvorrichtung nach einem der vorhergehenden Ansprüche, wobei die Beschichtung (4) einer kritischen Last L_{c} größer als 40 N standhält.

4. Bremsvorrichtung nach einem der vorhergehenden Ansprüche, wobei die Beschichtung (4) aus einem Nitrid, Carbid, Oxid, Silicid, Borid oder aus einer Kombination dieser Materialien besteht.

5. Bremsvorrichtung nach Anspruch 4, wobei die Beschichtung (4) einen metallischen Anteil aus Aluminium, Titan, Wolfram, Chrom, Hafnium, Zirkon oder aus einer Kombination dieser Werkstoffe aufweist.

6. Bremsvorrichtung nach einem der vorhergehenden Ansprüche, wobei die Beschichtung (4) in einem PVD (Physical Vapor Deposition)- oder CVD (Chemical Vapor Deposition)-Prozeß, insbesondere einem PECVD (Plasma-Enhanced-Chemical-Vapor-Deposition)-Prozeß, oder durch Plasmaspritzen aufgebracht ist.

7. Bremsvorrichtung nach einem der vorhergehenden Ansprüche, wobei die Beschichtung (4) auf endbearbeitete Bremskörper aufgebracht ist.

8. Bremsvorrichtung nach einem der vorhergehenden Ansprüche, wobei die Beschichtung (4) mehrlagig ist und zwischen Bremskörper (1) und Hartstoffschicht eine Korrosionsschutzschicht liegt.

9. Bremsvorrichtung nach Anspruch 9, wobei die Korrosionsschutzschicht aus Nickel oder Chrom besteht.

10. Bremsvorrichtung nach einem der vorhergehenden Ansprüche, wobei der Bremskörper (1) eine Bremsscheibe oder eine Bremstrommel ist.

## Claims

1. A mechanical braking device having a rotatable brake member (1) provided with a coating (4), on which a brake lining (2) exerts a force,
**characterised in that** the coating (4) comprises a layer of hard material 3 - 30 µm thick that increases the frictional action.

2. A braking device according to Claim 1, wherein the layer of hard material has a hardness of above 1000 HV (0.05/10) .

3. A braking device according to one of the preceding Claims, wherein the coating (4) withstands a critical load L_{c} greater than 40 N.

4. A braking device according to one of the preceding Claims, wherein the coating (4) is made from a nitride, carbide, oxide, silicide, boride or from a combination of these materials.

5. A braking device according to Claim 4, wherein the coating (4) comprises a metallic percentage of aluminium, titanium, tungsten, chromium, hafnium, zircon or a combination of these materials.

6. A braking device according to one of the preceding Claims, wherein the coating is applied in a PVD (physical vapour deposition) or CVD (chemical vapour deposition) process, in particular a PECVD (plasma enhanced chemical vapour deposition process), or by plasma spraying.

7. A braking device according to one of the preceding Claims, wherein the coating (4) is applied to finished brake members.

8. A braking device according to one of the preceding Claims, wherein the coating (4) is multi-layer and a layer for protection against corrosion is situated between the brake member (1) and the layer of hard material.

9. A braking device according to Claim 9, wherein the layer for protection against corrosion is made from nickel or chromium.

10. A braking device according to one of the preceding Claims, wherein the brake member (1) is a brake disc or a brake drum.

## Revendications

1. Dispositif de freinage mécanique comprenant un corps de freinage rotatif (1) doté d'un revêtement (4), corps de freinage sur lequel une garniture de frein (2) exerce une force,
**caractérisé en ce que** le revêtement (4) comprend une couche de matériau dur d'une épaisseur comprise entre 3 µm et 30 µm, augmentant l'effet de frottement.

2. Dispositif de freinage selon la revendication 1, où la couche de matériau dur a une dureté supérieure à 1000 HV (0,05/10).

3. Dispositif de freinage selon l'une des revendications précédentes, où le revêtement (4) résiste à une charge critique L_{c} supérieure à 40 N.

4. Dispositif de freinage selon l'une quelconque des revendications précédentes, où le revêtement (4) se compose d'un nitrure, d'un carbure, d'un oxyde, d'un siliciure, d'un borure ou d'une combinaison de ces matières.

5. Dispositif de freinage selon la revendication 4, où le revêtement (4) présente une partie métallique composée d'aluminium, de titane, de tungstène, de chrome, d'hafnium, de zirconium ou d'une combinaison de ces matières.

6. Dispositif de freinage selon l'une quelconque des revendications précédentes, où le revêtement (4) est appliqué en utilisant un procédé de dépôt physique en phase vapeur - PVD - *(en anglais : Physical Vapor Deposition)* ou de dépôt chimique en phase vapeur - CVD - *(en anglais : Chemical Vapor Deposition),* en particulier en utilisant un procédé de dépôt chimique en phase vapeur favorisé par le plasma - PECVD - *(en anglais : Plasma Enhanced Chemical Vapor Deposition)* ou en procédant par projection au plasma.

7. Dispositif de freinage selon l'une quelconque des revendications précédentes, où le revêtement (4) est appliqué sur des corps de freinage ayant reçu le polissage final.

8. Dispositif de freinage selon l'une quelconque des revendications précédentes, où le revêtement (4) est appliqué en plusieurs couches, et une couche de protection contre la corrosion se trouve entre le corps de freinage (1) et la couche de matériau dur.

9. Dispositif de freinage selon la revendication 8, où 1a couche de protection contre la corrosion se compose de nickel ou de chrome.

10. Dispositif de freinage selon l'une quelconque des revendications précédentes, où le corps de freinage (1) est un disque de frein ou un tambour de frein.
